# EUROPÄISCHE PATENTSCHRIFT

(11) **EP 1 419 918 B1**
(45) Veröffentlichungstag und Bekanntmachung des Hinweises auf die Patenterteilung: **30.12.2009**
(21) Anmeldenummer: 03024994.0
(22) Anmeldetag: 30.10.2003
(51) Int. Cl.: B60J 7/02

(54) **Schiebedachsystem für ein Kraftfahrzeug**
Sliding roof arrangement for a motor vehicle
Construction de toit coulissant pour véhicule automobile

(30) Priorität: 15.11.2002 DE 10253401
(43) Veröffentlichungstag der Anmeldung: 19.05.2004
(73) Patentinhaber: ArvinMeritor GmbH, 63128 Dietzenbach (DE)
(72) Erfinder: Böhm, Horst, 60599 Frankfurt (DE); Grimm, Rainer, 60599 Frankfurt (DE); Röhnke, Manfred, 63322 Rödermark (DE)
(74) Vertreter: Prinz & Partner

(56) Entgegenhaltungen:
- DE-A- 10 002 457
- US-A1- 2002 060 470

## Beschreibung

Die Erfindung betrifft einen Deckel für ein Schiebedachsystem und ein Schiebedachsystem.

Aus der gattungsgemäßen DE 100 02 457 ist ein Schiebedachsystem bekannt, bei dem zwei geradlinige Führungsschienen verwendet werden, die sich etwa in der Längsrichtung eines Fahrzeuges entlang dem Dach erstrecken. Der Abstand der Führungsschienen voneinander verringert sich von vorne nach hinten. Zur Führung des Deckels in den Schienen sind zwei Führungselemente vorgesehen, die jeweils in einer Führungsschiene aufgenommen sind und mit dem Deckel durch eine Parallelogrammführung verbunden sind. Dies ermöglicht, dass sich der Abstand der beiden Führungselemente voneinander entsprechend dem sich ändernden Abstand der Führungsschienen voneinander ändern kann. Mit den beiden Parallelogrammführungen kann der Deckel in der Theorie auch gegen Verdrehen um seine Hochachse oder gegen seitliches Verschieben gesichert werden. Diese Verdreh- und Verschiebesicherung beruht jedoch darauf, dass die Führungselemente in den Führungsschienen präzise geführt sind und sich nicht verkanten können. Anders ausgedrückt: Jede Kraft, die auf den Deckel einwirkt, um diesen seitlich zu verschieben oder um seine Hochachse zu verdrehen, führt über die Parallelogrammführungen dazu, dass die beiden Führungselemente im Sinne einer Verdrehung in der Führungsschiene beaufschlagt werden. Dies führt dazu, dass das ganze Schiebedachsystem vergleichsweise schwergängig ist und dazu neigt, sich zu verklemmen. Außerdem ist die Parallelogrammführung nur für geradlinige Führungsschienen geeignet.

Aus der DE 199 38 605 C1 ist ein Schiebedachsystem bekannt, bei dem in einem starren Dachelement mehrere seitliche Führungselemente mittels einer Schiebeführung angebracht sind. Auf diese Weise ist ein Toleranzausgleich in Fahrzeugquerrichtung möglich.

Aus der nachveröffentlichten EP 1 291 217 A1 ist ein Schiebedachsystem mit nicht-parallelen Führungsschienen bekannt, bei dem die in die Führungsschienen eingreifenden Führungselemente für den Deckel mit jeweils einem Hebel versehen sind. Jeder Hebel weist eine Zahnstange auf, die auf einander gegenüberliegenden Seiten in ein Zahnrad eingreifen. Auf diese Weise wird der Deckel bezüglich der Führungsschienen zentriert.

Die Aufgabe der Erfindung besteht darin, das ein Schiebedachsystem mit nicht-parallelen Führungsschienen zu schaffen, bei dem der Deckel relativ zu den Führungsschienen zentriert gehalten wird, ohne dass die Gefahr besteht, dass sich die Führungselemente in den Führungsschienen verklemmen oder sich das ganze System verspannt.

Diese Aufgabe wird gelöst mit einem Deckel bzw. einem Schiebedach gemäß den Ansprüchen 1, 2, 4 und 6. Allen erfindungsgemäßen Lösungen ist gemeinsam, dass bei einer Schiebeführung grundsätzlich ein sehr viel geringeres Risiko besteht, dass sich die Bauteile relativ zueinander verspannen, so dass die Leichtgängigkeit des Systems gewährleistet ist. Durch die gelenkige Verbindung zwischen der Führungsstange, die verschiebbar am Deckel geführt ist, und dem Führungselement ist gewährleistet, dass vom Deckel kein Drehmoment auf das Führungselement übertragen werden kann, so dassich das Führungselement auch nicht in einer Führungsschiene verspannen kann, in der es aufgenommen ist. Die gelenkige Anbringung der Führungselemente erlaubt auch, gekrümmte Führungsschienen zu verwenden.

Der besondere Vorteil der Lösung der der Erfindung zugrundeliegenden Aufgabe, wie sie in Anspruch 1 definiert ist, besteht darin, dass mit minimalem Bauaufwand eine Zentrierung des Deckels bezüglich den beiden Führungselementen gewährleistet ist.

Der besondere Vorteil der Lösung der der Erfindung zugrundeliegenden Aufgabe, wie sie in Anspruch 2 definiert ist, besteht darin, dass eine Zwangsführung verwendet wird, so dass mit geringem Bauaufwand eine Zentrierung des Deckels bezüglich der beiden Führungselemente gewährleistet ist.

Der besondere Vorteil der Lösung der der Erfindung zugrundeliegenden Aufgabe, wie sie in Anspruch 4 definiert ist, besteht darin, dass keine Kopplung zwischen den Führungsstangen der Führungselemente erforderlich ist; allein aufgrund der geeigneten räumlichen Ausrichtung der Verstellrichtung der Führungselemente ist gewährleistet, daß der Deckel zentriert ausgerichtet zwischen den beiden Führungsschienen verbleibt, in denen die Führungselemente verschiebbar aufgenommen sind.

Der besondere Vorteil der Lösung der der Erfindung zugrundeliegenden Aufgabe, wie sie in Anspruch 6 definiert ist, besteht darin, dass der Deckel mit geringem Aufwand mittig zwischen den beiden Führungsschienen zentriert ist.

Die Erfindung wird nachfolgend anhand verschiedener Ausführungsformen beschrieben, die in den beigefügten Zeichnungen dargestellt sind. In diesem zeigen:
- Figur 1 eine schematische Draufsicht auf ein erfindungsgemäßes Schiebedachsystem gemäß einer ersten Ausführungsform;
- Figur 2 eine schematische Draufsicht auf ein erfindungsgemäßes Schiebedachsystem gemäß einer zweiten Ausführungsform;
- Figur 3 eine schematische Draufsicht auf ein erfindungsgemäßes Schiebedachsystem gemäß einer dritten Ausführungsform; und
- Figur 4 eine schematische Draufsicht auf ein erfindungsgemäßes Schiebedachsystem gemäß einer vierten Ausführungsform.

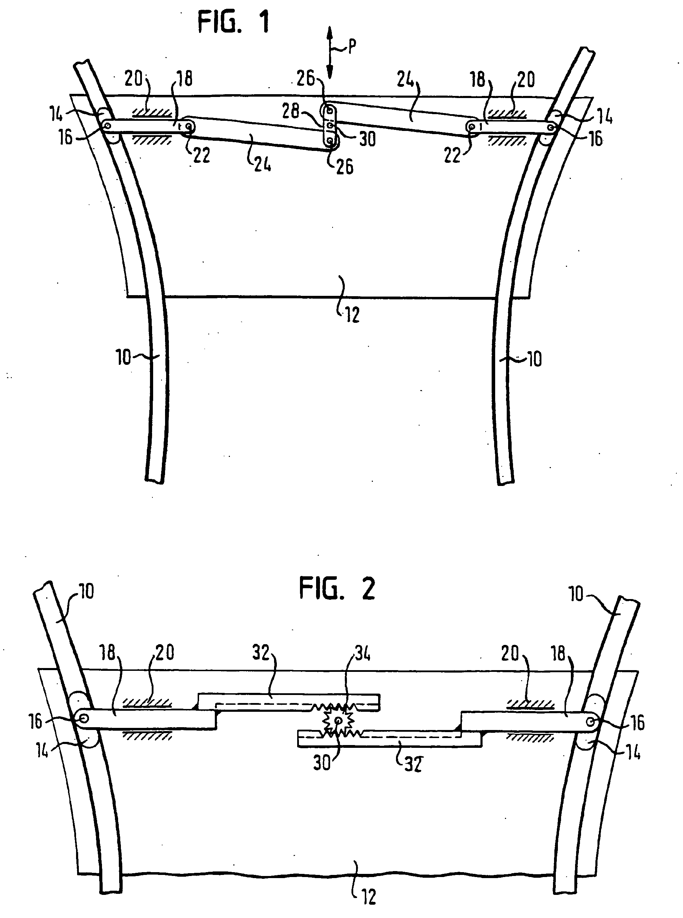

In Figur 1 ist ein Schiebedachsystem angezeigt, dessen wesentliche Bestandteile zwei Führungsschienen 10 und ein Deckel 12 sind. Die beiden Führungsschienen 10 erstrecken sich etwa der Längsrichtung eines (nicht dargestellten) Fahrzeuges an dessen Dach. Die beiden Führungsschienen 10 sind hier in zwei Ebenen gekrümmt ausgeführt, und zwar um eine zur Hochachse des Fahrzeuges parallele Achse und um eine zur Querachse des Fahrzeuges parallele Achse. Auf diese Weise können die beiden Führungsschienen 10 dem Verlauf der Seitenränder des Fahrzeugdaches folgen; moderne Fahrzeugdächer sind üblicherweise gekrümmt und haben eine sich von vorne nach hinten ändernde Breite. Dementsprechend ändert sich auch der Abstand der Führungsschienen voneinander in Abhängigkeit von der Position entlang der Fahrzeuglängsachse, die jeweils betrachtet wird.

Der Deckel 12 ist in grundsätzlich bekannter Weise in den Führungsschienen verschiebbar. Er kann von einem (nicht dargestellten) Antriebsmechanismus aus einer geschlossenen Stellung, in der er eine Öffnung im Dach des Fahrzeuges verschließt, in eine geöffnete Stellung überführt werden, in der die Öffnung im Dach freigegeben ist. Für die vorliegende Erfindung kommt es nicht auf die Details des Verstellmechanismus für den Deckel 12 oder auf das für den Deckel verwendete Material an; die Erfindung bezieht sich auf Deckel, die sowohl außerhalb als innerhalb des Dach verstellt werden, sowie auf Deckel aus Metall, Kunststoff, transparentem Material, etc.

In jeder Führungsschiene 10 ist ein Führungselement 14 angeordnet, daß hier als Schlitten ausgeführt ist. An den Führungselementen 14 greift der (nicht dargestellte) Antriebsmechanismus für den Deckel 12 an. An jedem Führungselement ist über ein Gelenk 16 eine Führungsstange 18 angebracht, die jeweils in einer Schiebeführung 20 verschiebbar aufgenommen ist. Jede Schiebeführung 20 ist fest am Deckel 12 angebracht. Mit dem vom Führungselement 14 abgewandten Ende jeder Führungsstange 18 ist über ein Gelenk 22 ein Hebel 24 verbunden, der über ein weiteres Gelenk 26 mit jeweils einem Ende eines Koppelhebels 28 verbunden ist. Der Koppelhebel 28 ist durch eine mittig zwischen den beiden Gelenken 26 angeordnete Schwenkachse 30 drehbar am Deckel 12 gelagert.

Durch eine Drehung des Koppelhebels 28 kann über die Hebel 24 und die Führungsstangen 20 der Abstand der Führungselemente 14 voneinander variiert und damit an den jeweils vorliegenden Abstand der Führungsschienen 10 voneinander angepaßt werden. Da der Koppelhebel 28 mittels der Schwenkachse 30 fest am Deckel 12 gelagert ist, ist dieser zwischen den beiden Führungselementen 14 zentriert. Aufgrund der von den beiden Schiebeführungen 20 vorgegebenen Verstellrichtung, die senkrecht zur Verschieberichtung P des Deckels 12 ist, kann sich der Mechanismus zur Verstellung der Führungselemente 14 nicht verspannen. Eine zusätzliche Führung ist nicht erforderlich. Es kann aber eine zweite Führung mit Führungselementen, Führungsstangen, Schiebeführung und Koppelhebel vorgesehen sein, um den Deckel stabiler zu führen.

In Figur 2 ist ein Schiebedachsystem gemäß einer zweiten Ausführungsform gezeigt. Für die von der ersten Ausführungsform bekannten Bauteile werden dieselben Bezugszeichen verwendet, und es wird insoweit obigen Erläuterungen verwiesen.

Der Unterschied zur ersten Ausführungsform besteht darin, daß bei der zweiten Ausführungsform die Führungsstangen 18 jeweils mit einer Zahnstange 32 versehen sind, die hier einstückig mit den Führungsstangen ausgeführt sind. Am Deckel 12 ist auf der Schwenkachse 30 ein Zahnrad 32 drehbar gelagert. Die Zahnstangen 32 sind so angeordnet, daß die aufeinander gegenüberliegenden Seiten in das Zahnrad 34 eingreifen.

Der auf diese Weise gebildete Kopplungsmechanismus ermöglicht es, den Abstand der Führungselemente 14 voneinander einzustellen, während gleichzeitig der Deckel 12, über die Schwenkachse 30, bezüglich den Führungen 14 zentriert ist.

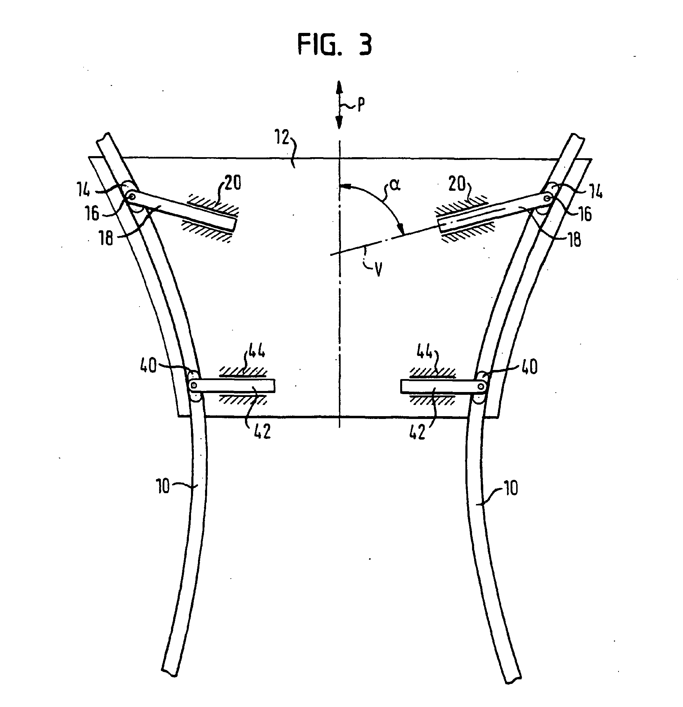

In Figur 3 ist eine dritte Ausführungsform gezeigt. Auch hier werden für die von den vorangegangenen Ausführungsformen bekannten Bauteile dieselben Bezugszeichen verwendet, und es wird auf die obigen Erläuterungen verwiesen.

Der Unterschied zu den ersten beiden Ausführungsformen besteht darin, daß die Führungsstangen 18 der Führungselemente 14 nicht miteinander gekoppelt sind. Die Führungsstangen 18 sind frei in den Schiebeführungen 20 verschiebbar. Ein weiterer Unterschied zu den ersten beiden Ausführungsformen besteht darin, daß die von den Schiebeführungen 20 vorgegebene Verstellrichtung V der Führungsstangen 18 schräg zur Verschieberichtung P ausgerichtet, also mit einem Winkel α, der von 90° verschieden ist. Der Winkel α ist dabei für beide Führungsstangen 18 identisch; die Führungsstangen sind also spiegelsymmetrisch bezüglich einer parallel zur Verschieberichtung P verlaufenden Mittelachse des Deckels 12 ausgerichtet.

Zusätzlich zu dem ersten Paar von Schiebeführungen und Führungselementen ist ein zweites Paar von Führungselementen 40 vorgesehen, die gelenkig an Führungsstangen 42 angebracht sind, die wiederum verschiebbar in Schiebeführungen 44 aufgenommen sind, die fest am Deckel 12 angebracht sind. Die beiden Schiebeführungen 44 geben eine Verstellrichtung für die beiden Führungsstangen 42 vor, die senkrecht zur Verstellrichtung P des Deckels 12 und damit auch senkrecht zur Mittelachse des Deckels 12 ist.

Aufgrund der unterschiedlichen Ausrichtungen der Schiebeführungen 20 einerseits und der Schiebeführungen 44 andererseits ist auch bei dieser Ausführungsform gewährleistet, daß der Deckel zwischen den Führungselementen 14 und auch zwischen den Führungselementen 40 zentriert ist. Da außerdem die Führungselemente gelenkig an den Führungsstangen angebracht sind und die Schiebeführungen eine reibungsarme Führung für die Führungsstangen bereit stellen, ist zuverlässig verhindert, daß sich der Deckel 12 relativ zu den Führungsschienen 10 verspannt, so daß die Leichtgängigkeit des Schiebedachsystems gewährleistet ist.

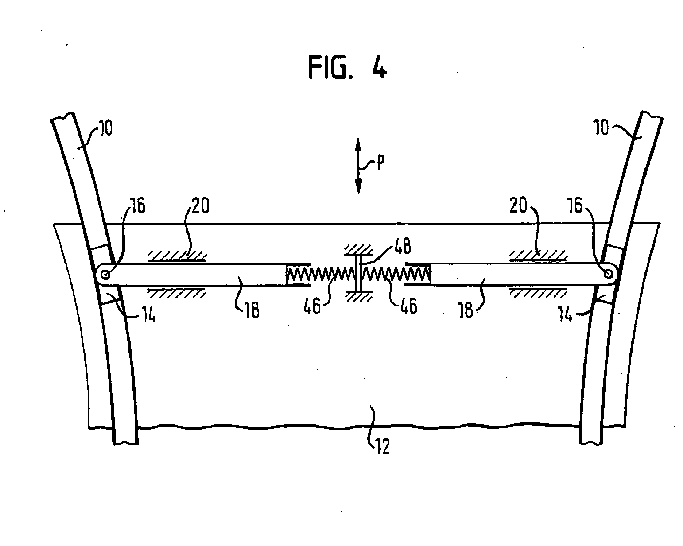

In Figur 4 ist eine vierte Ausführungsform gezeigt. Auch hier werden für die von den vorangegangenen Ausführungsformen bekannten Bauteile dieselben Bezugszeichen verwendet, und es wird auf die obigen Erläuterungen verwiesen.

Bei der vierten Ausführungsform werden ähnlich wie bei der ersten Ausführungsform zwei Schiebeführungen 20 verwendet, die senkrecht zur Verschieberichtung P des Deckels angeordnet sind. Jeder der in den Schiebeführungen angeordneten Führungsstangen 18 stützt sich durch eine Feder 46 an einem Anschlag 48 ab, der mittig am Deckel 12 angebracht ist. Auf diese Weise ist der Deckel mittig zwischen den beiden Führungsschienen zentriert.

## Patentansprüche

1. Deckel (12) für ein Schiebedachsystem, mit mindestens zwei Führungselementen (14), die an zwei einander gegenüberliegenden Seiten des Deckels verstellbar angeordnet sind, so dass ihr Abstand voneinander variabel ist, wobei die beiden Führungselemente (14) jeweils in einer Schiebeführung (20) angebracht sind, die eine Verstellrichtung für die Führungselemente (14) vorgibt, die von der Verschieberichtung (P) des Deckels (12) abweicht, so dass der Deckel (12) bezüglich der beiden Führungselemente (14) zentriert ist, **dadurch gekennzeichnet, dass** jedes Führungselement (14) gelenkig mit einer Führungsstange (18) verbunden ist, die in der Schiebeführung (20) aufgenommen ist, wobei jede Führungsstange (18) gelenkig mit einem Hebel (24) verbunden ist, wobei ein Koppelhebel (28) vorgesehen ist, der um eine Schwenkachse (30) schwenkbar am Deckel (12) gelagert ist, und wobei die beiden Hebel (24) auf der einen und der anderen Seite der Schwenkachse (30) gelenkig mit dem Koppelhebel (28) verbunden sind.

2. Deckel (12) für ein Schiebedachsystem, mit mindestens zwei Führungselementen (14), die an zwei einander gegenüberliegenden Seiten des Deckels verstellbar angeordnet sind, so dass ihr Abstand voneinander variabel ist, wobei die beiden Führungselemente (14) jeweils in einer Schiebeführung (20) angebracht sind, die eine Verstellrichtung für die Führungselemente (14) vorgibt, die von der Verschieberichtung (P) des Deckels (12) abweicht, so dass der Deckel (12) bezüglich der beiden Führungselemente (14) zentriert ist, **dadurch gekennzeichnet, dass** jedes Führungselement (14) gelenkig mit einer Führungsstange (18) verbunden ist, die in der Schiebeführung (20) aufgenommen ist, wobei jede Führungsstange (18) mit einer Zahnstange (32) versehen ist und wobei am Deckel (12) drehbar ein Zahnrad (34) gelagert ist, in das die beiden Zahnstangen (32) eingreifen.

3. Deckel nach Anspruch 2, **dadurch gekennzeichnet, dass** die Zahnstange (32) einstückig mit der Führungsstange (18) ausgeführt ist.

4. Deckel (12) für ein Schiebedachsystem, mit mindestens zwei Führungselementen (14), die an zwei einander gegenüberliegenden Seiten des Deckels verstellbar angeordnet sind, so dass ihr Abstand voneinander variabel ist, wobei die beiden Führungselemente (14) jeweils in einer Schiebeführung (20) angebracht sind, die eine Verstellrichtung für die Führungselemente (14) vorgibt, die von der Verschieberichtung (P) des Deckels (12) abweicht, so dass der Deckel (12) bezüglich der beiden Führungselemente (14) zentriert ist, **dadurch gekennzeichnet, dass** jedes Führungselement (14) gelenkig mit einer Führungsstange (18) verbunden ist, die in der Schiebeführung (20) aufgenommen ist, wobei ein zweites Paar von Führungselementen (40) mit Führungsstangen (42) vorgesehen ist, die jeweils in einer Schiebeführung (44) am Deckel (12) gelagert sind, wobei die Verstellrichtung des ersten Paares von Führungselementen (14) spiegelsymmetrisch schräg zur Verschieberichtung (P) des Deckels (12) ist und die Verstellrichtung des zweiten Paares von Führungselementen (40) senkrecht zur Verschieberichtung (P) des Deckels ist.

5. Schiebedachsystem mit zwei Führungsschienen (10), die sich mit einem sich verändernden Abstand entlang eines Dachs eines Kraftfahrzeugs erstrecken, und einem Deckel (12) nach einem der vorhergehenden Ansprüche.

6. Schiebedachsystem mit zwei Führungsschienen (10), die sich mit einem sich verändernden Abstand entlang eines Dachs eines Kraftfahrzeugs erstrecken, und einem Deckel (12) mit mindestens zwei Führungselementen (14), die an zwei einander gegenüberliegenden Seiten des Deckels verstellbar angeordnet sind, so dass ihr Abstand voneinander variabel ist, wobei die beiden Führungselemente (14) jeweils in einer Schiebeführung (20) angebracht sind, die eine Verstellrichtung für die Führungselemente (14) vorgibt, die von der Verschieberichtung (P) des Deckels (12) abweicht, so dass der Deckel (12) bezüglich der beiden Führungselemente (14) zentriert ist, **dadurch gekennzeichnet, dass** jedes Führungselement (14) gelenkig mit einer Führungsstange (18) verbunden ist, die in der Schiebeführung (20) aufgenommen ist, wobei sich jede Führungsstange (18) durch eine Feder (46) an einem Anschlag (48) abstützt, der mittig am Deckel (12) angebracht ist.

7. Schiebedachsystem nach Anspruch 5 oder 6, **dadurch gekennzeichnet, dass** die Führungsschienen (10) sich geradlinig erstrecken.

8. Schiebedachsystem nach Anspruch 5 oder 6, **dadurch gekennzeichnet, dass** die Führungsschienen (10) gekrümmt sind

## Claims

1. Cover (12) for a sliding roof system, with at least two guide elements (14) which are arranged adjustably on two mutually opposite sides of the cover such that the distance thereof from each other is variable, wherein the two guide elements (14) are each fitted in a sliding guide (20) which predetermines an adjustment direction for the guide elements (14), which adjustment direction differs from the displacement direction (P) of the cover (12) such that the cover (12) is centred with respect to the two guide elements (14), **characterized in that** each guide element (14) is connected in an articulated manner to a guide rod (18) which is accommodated in the sliding guide (20), each guide rod (18) being connected in an articulated manner to a lever (24), a coupling lever (28) being provided which is mounted on the cover (12) in a manner such that it is pivotable about a pivot axis (30), and the two levers (24) being connected in an articulated manner to the coupling lever (28) on the one side and on the other side of the pivot axis (30).

2. Cover (12) for a sliding roof system, with at least two guide elements (14) which are arranged adjustably on two mutually opposite sides of the cover such that the distance thereof from each other is variable, wherein the two guide elements (14) are each fitted in a sliding guide (20) which predetermines an adjustment direction for the guide elements (14), which adjustment direction differs from the displacement direction (P) of the cover (12) such that the cover (12) is centred with respect to the two guide elements (14), **characterized in that** each guide element (14) is connected in an articulated manner to a guide rod (18) which is accommodated in the sliding guide (20), each guide rod (18) being provided with a rack (32), and a pinion (34) in which the two racks (32) engage being mounted rotatably on the cover (12).

3. Cover according to Claim 2, **characterized in that** the rack (32) is formed integrally with the guide rod (18).

4. Cover (12) for a sliding roof system, with at least two guide elements (14) which are arranged adjustably on two mutually opposite sides of the cover such that the distance thereof from each other is variable, wherein the two guide elements (14) are each fitted in a sliding guide (20) which predetermines an adjustment direction for the guide elements (14), which adjustment direction differs from the displacement direction (P) of the cover (12) such that the cover (12) is centred with respect to the two guide elements (14), **characterized in that** each guide element (14) is connected in an articulated manner to a guide rod (18) which is accommodated in the sliding guide (20), a second pair of guide elements (40) being provided with guide rods (42) which are each mounted on the cover (12) in a sliding guide (44), the adjustment direction of the first pair of guide elements (14) being mirror-symmetrically oblique with respect to the displacement direction (P) of the cover (12), and the adjustment direction of the second pair of guide elements (40) being perpendicular to the displacement direction (P) of the cover.

5. Sliding roof system with two guide rails (10) which extend with a varying distance along a motor vehicle roof, and with a cover (12) according to one of the preceding claims.

6. Sliding roof system with two guide rails (10) which extend with a varying distance along a motor vehicle roof, and with a cover (12), with at least two guide elements (14) which are arranged adjustably on two mutually opposite sides of the cover such that the distance thereof from each other is variable, wherein the two guide elements (14) are each fitted in a sliding guide (20) which predetermines an adjustment direction for the guide elements (14), which adjustment direction differs from the displacement direction (P) of the cover (12) such that the cover (12) is centred with respect to the two guide elements (14), **characterized in that** each guide element (14) is connected in an articulated manner to a guide rod (18) which is accommodated in the sliding guide (20), each guide rod (18) being supported by a spring (46) on a stop (48) which is fitted centrally on the cover (12).

7. Sliding roof system according to Claim 5 or 6, **characterized in that** the guide rails (10) extend rectilinearly.

8. Sliding roof system according to Claim 5 or 6, **characterized in that** the guide rails (10) are curved.

## Revendications

1. Panneau (12) pour un système de toit coulissant, comprenant au moins deux éléments de guidage (14), qui sont disposés de manière déplaçable sur deux côtés opposés du panneau, de sorte que leur espacement l'un de l'autre soit variable, les deux éléments de guidage (14) étant montés à chaque fois dans une coulisse (20) qui prédéfinit une direction de glissement pour les éléments de guidage (14), qui s'écarte de la direction de glissement (P) du panneau (12), de sorte que le panneau (12) soit centré par rapport aux deux éléments de guidage (14), **caractérisé en ce que** chaque élément de guidage (14) est connecté de manière articulée à une tige de guidage (18), qui est reçue dans la coulisse (20), chaque tige de guidage (18) étant connectée de manière articulée à un levier (24), un levier d'accouplement (28) étant prévu, lequel est monté sur le panneau (12) de manière à pouvoir pivoter autour d'un axe de pivotement (30), et les deux leviers (24) étant connectés de manière articulée au levier d'accouplement (28) sur l'un et l'autre côté de l'axe de pivotement (30).

2. Panneau (12) pour un système de toit coulissant, comprenant au moins deux éléments de guidage (14) qui sont disposés de manière déplaçable sur deux côtés opposés du panneau, de sorte que leur espacement l'un de l'autre soit variable, les deux éléments de guidage (14) étant montés à chaque fois dans une coulisse (20) qui prédéfinit une direction de glissement pour les éléments de guidage (14), qui s'écarte de la direction de glissement (P) du panneau (12), de sorte que le panneau (12) soit centré par rapport aux deux éléments de guidage (14), **caractérisé en ce que** chaque élément de guidage (14) est connecté de manière articulée à une tige de guidage (18), qui est reçue dans la coulisse (20), chaque tige de guidage (18) étant pourvue d'une crémaillère (32) et une roue dentée (34) étant montée à rotation sur le panneau (12), dans laquelle les deux crémaillères (32) viennent en prise.

3. Panneau selon la revendication 2, **caractérisé en ce que** la crémaillère (32) est réalisée d'une seule pièce avec la tige de guidage (18).

4. Panneau (12) pour un système de toit coulissant, comprenant au moins deux éléments de guidage (14), qui sont disposés de manière déplaçable sur deux côtés opposés du panneau, de sorte que leur espacement l'un de l'autre soit variable, les deux éléments de guidage (14) étant montés à chaque fois dans une coulisse (20) qui prédéfinit une direction de glissement pour les éléments de guidage (14), qui s'écarte de la direction de glissement (P) du panneau (12), de sorte que le panneau (12) soit centré par rapport aux deux éléments de guidage (14), **caractérisé en ce que** chaque élément de guidage (14) est connecté de manière articulée à une tige de guidage (18), qui est reçue dans la coulisse (20), une deuxième paire d'éléments de guidage (40) étant prévue avec des tiges de guidage (42) qui sont montées chacune dans une coulisse (44) sur le panneau (12), la direction de coulissement de la première paire d'éléments de guidage (14) étant symétrique suivant un plan obliquement par rapport à la direction de coulissement (P) du panneau (12), et la direction de coulissement de la deuxième paire d'éléments de guidage (40) étant perpendiculaire à la direction de coulissement (P) du panneau.

5. Système de toit coulissant comprenant deux rails de guidage (10) qui s'étendent le long d'un toit d'un véhicule automobile avec un espacement variable, et comprenant un panneau (12) selon l'une quelconque des revendications précédentes.

6. Système de toit coulissant comprenant deux rails de guidage (10) qui s'étendent le long d'un toit d'un véhicule automobile avec un espacement variable, et comprenant un panneau (12) avec au moins deux éléments de guidage (14), qui sont disposés de manière déplaçable sur deux côtés opposés du panneau, de sorte que leur espacement l'un de l'autre soit variable, les deux éléments de guidage (14) étant montés à chaque fois dans une coulisse (20) qui prédéfinit une direction de glissement pour les éléments de guidage (14), qui s'écarte de la direction de glissement (P) du panneau (12), de sorte que le panneau (12) soit centré par rapport aux deux éléments de guidage (14), **caractérisé en ce que** chaque élément de guidage (14) est connecté de manière articulée à une tige de guidage (18), qui est reçue dans la coulisse (20), chaque tige de guidage (18) s'appuyant par le biais d'un ressort (46) contre une butée (48) qui est montée centralement sur le panneau (12).

7. Système de toit coulissant selon la revendication 5 ou 6, **caractérisé en ce que** les rails de guidage (10) s'étendent en ligne droite.

8. Système de toit coulissant selon la revendication 5 ou 6, **caractérisé en ce que** les rails de guidage (10) sont courbes.
